# EUROPEAN PATENT APPLICATION

(11) **EP 3 139 572 A1**
(43) Date of publication of application: **08.03.2017**
(21) Application number: 15306364.9
(22) Date of filing: 07.09.2015
(51) Int. Cl.: H04L 29/08, G06Q 30/02

(54) **USER PROFILING FOR LOCATION BASED ADVERTISING**

(71) Applicant: ALCATEL LUCENT, 92100 Boulogne-Billancourt (FR)
(72) Inventor: MATHUR, Akhil, Dublin (IE)
(74) Representative: Mouney, Jérôme

(57) **Abstract**

For a user profiling for location based advertising, a server (AS) linked to a set of base stations (BS) to which a set of communication devices (CD) is connected is able to
receive messages from base stations (BS), each message containing a keyword list including keywords related to Uniform Resource Locator traffic having passed through the base station from a communication device (CD) and being associated with the identifier of the base station and the international identity IMSI of the communication device, and each received message updating a user location profile linked to the international identity IMSI of the communication device (CD),
for each received message, extract a location category corresponding to the identifier of the base station and associating the location category with the keyword list in the user location profile,
assign a weight to each keyword of the keyword list associated with a location category in a user location profile, by increasing the weight of the keywords which occur frequently in the location category and rarely in other location categories,
assign a weight to each location category of the user location profile, by increasing the weight of the location categories which occur frequently in the user location profile and rarely in other user location profiles.

## Description

### FIELD OF THE INVENTION

The present invention pertains to location based advertising.

### BACKGROUND

The underlying idea behind a Location Based Advertising (LBA) service is to provide ads to users based on their location visit profiles. For example, if a user is a frequent visitor of a place (e.g. a café), the LBA service provides relevant ads (e.g. coffee coupons) to the user. This is typically done by identifying the locations visited by the user through the GPS sensor on their phone, or through specialized sensing infrastructure (e.g. Bluetooth Low Energy (BLE) beacons) deployed at those locations. Eventually, this 'visit history' of each user is used to create a location profile for them and targeted advertising is done on this profile information

The downside of these approaches is that they place burden on the users to install an application (to communicate with the BLE beacons) or to constantly have the GPS sensor running that consumes power. At present, there is no seamless solution whereby users can opt-in to LBA services without having to worry about installing apps on their phones, or incurring battery consumption by GPS sensors on their phones.

There is another major limitation with the current location profiling techniques. While tailoring ads to a user's location profile (the list and frequency of user's visits to different places), they disregard the actual digital content flowing through the communication network at that location - which in fact carries much useful information about user's interests. By missing this network communication information, and solely relying on the nature of the location, a lot of insights about the user profile are lost and it results in poorer ad quality. For illustration with the example of a university - inside which users can have very different interests (e.g. people in the finance department may have entirely different interests from those in the Computer science department). However, current LBA services consider the university as a monolithic entity and profile everyone into the same bucket.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for user profiling for location based advertising, the method comprising the following steps in a server included in a telecommunication network and linked to a set of base stations to which a set of communication devices is connected:
receiving messages from base stations, each message containing a keyword list including keywords related to Uniform Resource Locator traffic having passed through the base station during the time a communication device was connected to the base station and being associated with the identifier of the base station and the international identity IMSI of the communication device, and each received message updating a user location profile linked to the international identity IMSI of the communication device,
for each received message, extracting a location category corresponding to the identifier of the base station and associating the location category with the keyword list in the user location profile,
assigning a weight to each keyword of the keyword list associated with a location category in a user location profile, by increasing the weight of the keywords which occur frequently in the location category and rarely in other location categories in the user location profile,
assigning a weight to each location category of the user location profile, by increasing the weight of the location categories which occur frequently in the user location profile and rarely in other user location profiles.

Advantageously, the invention presents a small cell based network-centric technique of providing LBA which eliminates any additional burden on the user's communication device: there is no need for installing any application on the communication device, which is a major advantage over existing approaches used by LBA systems.

Moreover, the user location profiles do not just contain the nature of the locations visited by users but also the temporal characteristics of that location while the user was present there, thus taking into account the differences between users who are at the same location.

In an embodiment, the keywords related to Uniform Resource Locator traffic having passed through the base station from a communication device during the time said communication device was connected to said base station.

In an embodiment, a term frequency-inverse document frequency is applied to the keyword list for assigning a weight to each keyword of the keyword list.

In an embodiment, a term frequency-inverse document frequency is applied to the location categories of the user location profile for assigning a weight to each location category of the user location profile.

In an embodiment, the server keeps track of the frequency of the occurrence of keywords in a keyword list in the user location profiles and keeps track of the frequency of the occurrence of location categories in the user location profiles.

In an embodiment, when a keyword list is received for a given location category of a user location profile, the frequencies of the occurrence of keywords in the keyword list are updated in the keyword list and the step of assigning a weight to each keyword of the keyword list is performed for each keyword list of the user location profile.

In an embodiment, when a keyword list is received for a given location category of a user location profile, the frequency of the occurrence of said given location category is updated in the user location profile and the step of assigning a weight to each location category of the user location is performed for each location category of the user location profile.

In an embodiment, whereby when an advertisement is to be sent in a given area for a given topic, the application server analyses the user location profiles to determine a user location profile having highest weight for a keyword relating to said given topic among a set of user location profiles having higher weights for a location category relating to said given area.

The invention also pertains to a server for user profiling for location based advertising, the server being included in a telecommunication network and linked to a set of base stations to which a set of communication devices is connected, the server comprising:
means for receiving messages from base stations, each message containing a keyword list including keywords related to Uniform Resource Locator traffic having passed through the base station during the time a communication device was connected to the base station and being associated with the identifier of the base station and the international identity IMSI of the communication device, and each received message updating a user location profile linked to the international identity IMSI of the communication device,
means for extracting, for each received message, a location category corresponding to the identifier of the base station and associating the location category with the keyword list in the user location profile,
means for assigning a weight to each keyword of the keyword list associated with a location category in a user location profile, by increasing the weight of the keywords which occur frequently in the location category and rarely in other location categories in a user location profile,
means for assigning a weight to each location category of the keyword list of the user location profile, by increasing the weight of the location categories which occur frequently in the user location profile and rarely in other user location profiles.

The invention also pertains to a computer program capable of being implemented within a server, said program comprising instructions which, when the program is executed within said server, carry out steps according to the inventive method.

The present invention and the benefits thereof shall be better understood upon examining the description below, which makes reference to the attached figures, in which:
- FIG. 1 is a schematic block diagram of a communication system according to one embodiment of the invention for a user profiling for location based advertising; and
- FIG. 2 is an algorithm of a method for a user profiling for location based advertising according to one embodiment of the invention.

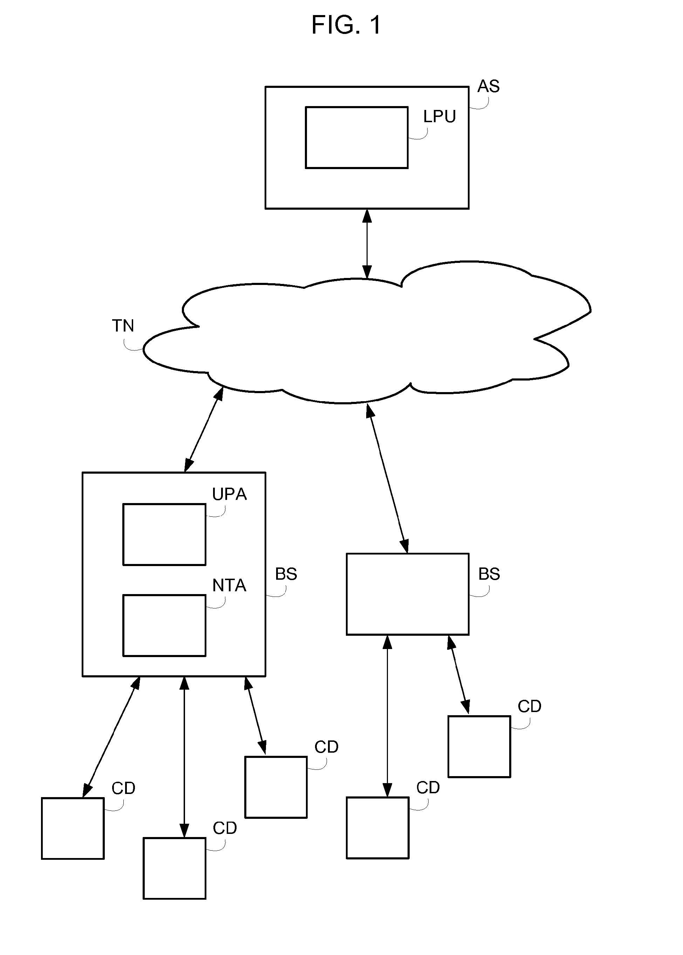

With reference to FIG. 1, a communication system according to the invention comprises a communication device CD, an application server AS and a set of base stations communicating with the application server AS through a telecommunication network TN.

For example, the telecommunication network TN is a digital cellular radio communication network of the GSM (Global System for Mobile communications) or UMTS (Universal Mobile Telecommunications System) or even CDMA (Code Division Multiple Access) type or even LTE (Long Term Evolution) type. The GSM type network may be coupled with a GPRS (General Packet Radio Service) network for the transmission of data by packets with mobility and access management via radio. For example, the telecommunication network is able to authorize a communication device to send and receive data via the network when the communication device is identified at the network, for example by means of a subscriber identification module associated with the communication device.

FIG. 1 does not represent known main components of the localization area of the telecommunication network where the communication device is situated. For example in a GSM type network, the localization area comprises a switch MSC (Mobile service Switching Center) which is connected by means of a BSC (Base Station Controller) to a base station BTS (Base Transceiver Station) connected by means of a radio link to the communication device.

The communication device CD, CDT can establish a connection with the telecommunication network TN through a respective radio access network via a radio link with the base station. The radio access networks are distributed over a geographical area typically divided into cells that are served by a corresponding base station BS. Base stations communicate over an air interface with the user equipment, with several base stations being connected to a radio network controller (RNC) or base station controller (BSC) that is connected to one or more core networks. In the typical situation, secure communications for users of the system may be provided through encryption and decryption at the base station.

In one embodiment wherein the telecommunication network TN is a GSM type network, the telecommunication network TN comprises a location register HLR (Home Location Register) and one or more VLR (Visitor Location Register) location registers connected to the switch MSC. The HLR register is similar to a database containing an international identity IMSI (International Mobile Subscriber Identity) associated with a subscription profile for each user in the telecommunication network TN. The register VLR is a relay of the register HLR and contains characteristics of the users located in the location area to manage their mobility.

A communication device CD, CDT is capable of establishing a communication within a telecommunication network TN, for example with another communication device. For instance, a communication device CD is a mobile telephone, a smartphone, or a tablet, an electronic telecommunication device or object that is personal to the user.

A base station BS comprises a network traffic aggregator NTA which is a software component analyzing the temporal traffic patterns on the cell while users are connected to it. The base station further comprises a user profile aggregator UPA that creates profiles of user to be sent to the cloud backend.

For example, the base station is a pico base station or a femto base station located in residential buildings. The base station is linked to the core of the telecommunication network TN, typically via a modem and a wired line.

The base station includes baseband processing and radio module for a coverage area which access type is GSM (Global System for Mobile communications) coupled with a GPRS (General Packet Radio Service) network or UMTS (Universal Mobile Telecommunications System) or even CDMA (Code Division Multiple Access) or even LTE (Long Term Evolution).

The application server AS is a central node accessible via the telecommunication network TN and is able to communicate with the base stations BS of the telecommunication network.

The application server AS comprises a location profile unit LPU linked to a location database and a user profile database.

The location profile unit LPU computes a user location profile for each user, a location profile containing the semantic locations the user visited (and their relative weights), and the keywords observed in the network traffic while the user was at those locations.

The location database contains identifiers of base stations and the user profile database contains location profiles of users.

The application server AS combines the location of a user obtained from a base station with the temporal traffic patterns at that base station and creates a linked unified profile of the user on the operator backend.

The location profile unit LPU computes numerical statistics on the user location profiles to emphasize some keywords and locations in the user location profiles.

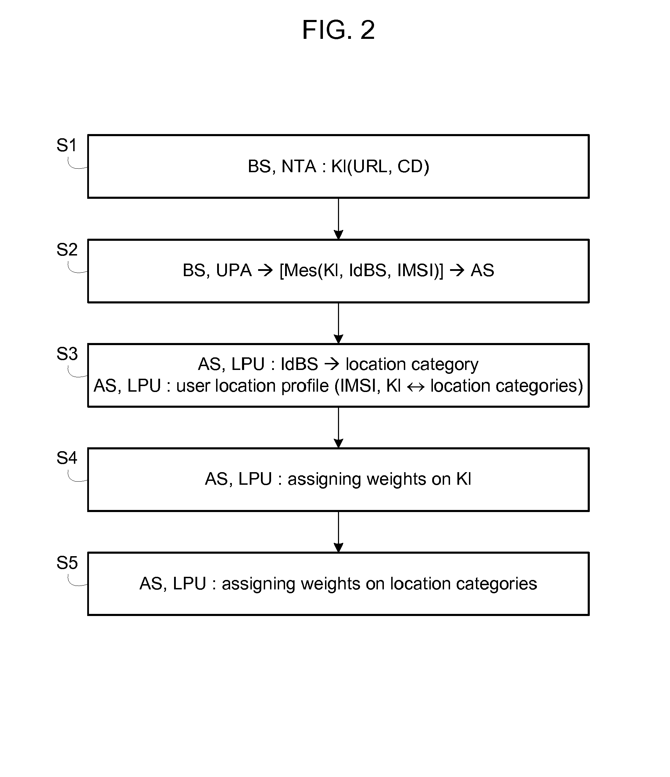

With reference to FIG. 2, a method for a user profiling for location based advertising according to one embodiment of the invention comprises steps S1 to S5 executed within the communication system.

In the following embodiment, we consider a predefined set of base stations and a set of communication devices that are connected to one or more of the base stations.

In step S1, each base station of the predefined set of base stations analyses a temporal traffic pattern from communication devices connected to the base station.

The network traffic aggregator NTA of the base station executes a semantic analysis of the URL (Uniform Resource Locator) traffic passing through the base station for a communication device, when this communication device is connected to the base station.

The network traffic aggregator NTA produces a set of keywords for each URL and aggregates all the produced keywords. One or more produced keywords are deemed to characterize an URL. For example, a keyword can be "search" for the URL of a search engine, or a keyword can be "banking" for the URL of an online bank.

At the end of the semantic analysis, the network traffic aggregator NTA generates a keyword list KI from the aggregation of the produced keywords, the keyword list being associated with the international identity IMSI (International Mobile Subscriber Identity) of the communication device. The keyword list KI keeps track of the frequency of the occurrence of each keyword in the list. For example, a keyword list is such as: {social networking: 5, sports news: 1, science: 4, technology: 8, banking: 1}.

Each base station of the set of base stations generates a keyword list for each communication device from the set of communication devices connected to it.

In step S2, the user profile aggregator UPA of the base station sends a message Mes to the application server AS, the message Mes containing an identifier IdBS of the base station, the keyword list KI associated with the international identity IMSI of the communication device.

Thus the application server receives a message Mes from each base station of the set of base stations for each communication device of the set of communication devices connected to the base station and creates a user location profile based on the content of the received message and linked to the international identity IMSI of the communication device.

In step S3, the location profile unit LPU extracts a location category corresponding to the identifier of the base station for each received message.

For example, an identifier may correspond to the location of a fast-food, belonging to the location category 'RESTAURANT'.

The location category is added to the user location profile and associated with the keyword list KI.

If different messages are received for the same communication device, which means different messages including the same international identity IMSI but different keyword lists and different identifiers of base station, the location profile unit LPU adds to the user location profile the location category associated with the keyword list for each received message.

If a received message yields to a location category already existing in a user location profile, the existing keyword list KI associated with the existing location category is combined and updated with the received keyword list.

For example, the user location profile contains the following locations categories with respective keyword lists: RESTURANT: {social: 10, banking: 1, finance: 5}, HOSPITAL: {finance:50, disease:10}, SCHOOL: {kids: 1, email: 4}. If a received message with the keyword list: {social: 2, search: 2} yields to the location category RESTAURANT, the existing location category RESTAURANT is then associated with an updated keyword list as: {social: 12, banking: 1, finance: 5, search: 2}.

The location profile unit LPU keeps track of the frequency of the occurrence of a location category from the different received messages for each user location profile. For example, user location profiles A and B contain the following respective location lists:
Location list A: {CAFE: 10, PARK: 2}
Location list B: {TECHNOLOGY: 11, SHOPPING: 1, RESTAURANT: 1}

In step S4, the location profile unit LPU assigns a weight to each keyword (e.g. technology, science) of the keyword list KI in the user location profile. To that end, a term frequency-inverse document frequency (TF-IDF) or dictionaries could be used to assign the weight to each keyword of a keyword list. In a general manner, there is an increase of the weight of the keywords which occur frequently in a document (the location category) and rarely in other documents (other location categories).

The intuition behind applying TF-IDF weights is to increase the weights of those keywords which occur too frequently in a location category of the user location profile and also for those which are unique to the location category with respect to other location categories of the user location profile. At the end of this step, all the keywords in the various categories will have updated TF-IDF weights. For example for two received messages for a same communication device, the user location profile contains the following information:
RESTAURANT: {science: 1.8, technology: 0.6, banking: 1.1}
UNIVERSITY: {science: 1.8, email: 1.6, search: 0.5}

Every time a keyword list is received for a given location category, the term frequencies are updated in the keyword list associated with the location category and a TDF-IDF computation is done again for all the location categories of the user location profile. A TDF-IDF computation on the keyword list is done as soon as the user location profile contains at least two location categories.

In step S5, the location profile unit LPU contains different user location profiles, each user location profile containing at least one location category.

The user profile aggregator UPA assigns a weight to each location category in the user location profile, increasing the weight of the location categories which occur frequently in the user location profile and rarely in other user location profiles. For example, the user profile aggregator UPA applies a TF-IDF to each location category using the location list.

For example, the location profile unit LPU contains two user location profiles of user A and user B including the following information:
Location list A: {CAFE: 10, PARK: 2}
Location list B: {TECHNOLOGY: 11, SHOPPING: 1, RESTAURANT: 1}

The TF-IDF computation is done across all location lists. For user B, the TF-IDF will yield to an updated location list:
Location list B: {TECHNOLOGY: 0,25, SHOPPING: 0,02, RESTAURANT: 0,02}

Also, every time a message is received, yielding to a given location category, the frequency of the occurrence of the given location category is updated and a TF-IDF computation is done again for all the location categories of the different user location profiles.

At the end of these method steps, a user location profile for each communication device from the set of communication devices is stored in the user profile database comprising the semantic locations (and their relative weights) visited by the user of these communication devices, and the keywords observed in the network traffic related to those locations. Based on this information and by applying the principles of homophily and topophily, such user location profile is much richer for ad targeting, than just knowing the places a user visits. With this approach is known the locations visited by the user and also the temporal interests of the user when the user was at certain locations.

With such kind of user location profile, it becomes much easier to identify the target users. In an illustrative example, a person named Alice spends 8 hours a day working in the finance department. In these 8 hours while she is connected to the small cell in that location, the system will analyze the traffic patterns and intuitively it can be said that the semantic analysis of the traffic on the cell will show high activity on keywords related to Finance. For example, the network traffic aggregator will create a keyword list such as: {finance: 30, banking: 20, news: 8, social-networking: 8...} which shows that finance and banking were the top 2 keywords in network traffic while Alice was connected to the cell.

Thereafter, the keyword list along with the identifier of the base station and Alice's IMSI number is sent to the application server where category HOSPITAL is added to Alice's profile, along with the updated keyword list. On applying the TF-IDF on each keyword, "Finance" will again show up at the top because a) it has a high frequency in Alice's user location profile, and b) it is not a very common keyword that would show up in every user location profile.

When an advertisement for a Finance Software has to be sent, the application server could first look for all users in the user profile database, for whom HOSPITAL has a high TF-IDF value or weight. It will select Alice and probably a few others (e.g. Bob, Carl who are doctors in the same hospital). Next, the application server will analyze the user location profiles for Alice, Bob and Carl to check for those users who have a high TF-IDF value for "Finance" keyword. Since Bob and Carl are not in the finance department, their cell traffic will not have finance as the top keyword - and therefore, both of them will be filtered out - and Alice would emerge as the right candidate for ad delivery.

In other words, when an advertisement is to be sent in a given area for a given topic, the application server analyses the user location profiles to determine a user location profile having highest weight for a keyword relating to said given topic among a set of user location profiles having higher weights for a location category relating to said given area.

The invention described here relates to a method and a device for a user profiling in location based advertising. According to one implementation of the invention, the steps of the invention are determined by the instructions of a computer program incorporated into the device, such as the protection device PD. The program comprises program instructions which, when said program is loaded and executed within the device, carry out the steps of the inventive method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the inventive method.

## Claims

1. A method for user profiling for location based advertising, the method comprising the following steps in a server (AS) included in a telecommunication network (TN) and linked to a set of base stations (BS) to which a set of communication devices (CD) is connected:
receiving (S2) messages from base stations (BS), each message containing a keyword list including keywords related to Uniform Resource Locator traffic having passed through the base station during the time a communication device (CD) was connected to the base station and being associated with the identifier of the base station and the international identity IMSI of the communication device, and each received message updating a user location profile linked to the international identity IMSI of the communication device (CD),
for each received message, extracting (S3) a location category corresponding to the identifier of the base station and associating the location category with the keyword list in the user location profile,
assigning (S4) a weight to each keyword of the keyword list associated with a location category in a user location profile, by increasing the weight of the keywords which occur frequently in the location category and rarely in other location categories in the user location profile,
assigning (S5) a weight to each location category of the user location profile, by increasing the weight of the location categories which occur frequently in the user location profile and rarely in other user location profiles.

2. A method according to claim 1, whereby the keywords related to Uniform Resource Locator traffic having passed through the base station from a communication device during the time said communication device was connected to said base station.

3. A method according to claim 1 or 2, whereby a term frequency-inverse document frequency is applied to the keyword list for assigning a weight to each keyword of the keyword list.

4. A method according to any of the claims 1 to 3, whereby a term frequency-inverse document frequency is applied to the location categories of the user location profile for assigning a weight to each location category of the user location profile.

5. A method according to any of the claim 1 to 4, whereby the server keeps track of the frequency of the occurrence of keywords in a keyword list in the user location profiles and keeps track of the frequency of the occurrence of location categories in the user location profiles.

6. A method according to claim 5, whereby when a keyword list is received for a given location category of a user location profile, the frequencies of the occurrence of keywords in the keyword list are updated in the keyword list and the step of assigning a weight to each keyword of the keyword list is performed for each keyword list of the user location profile.

7. A method according to claim 5 or 6, whereby when a keyword list is received for a given location category of a user location profile, the frequency of the occurrence of said given location category is updated in the user location profile and the step of assigning a weight to each location category of the user location is performed for each location category of the user location profile.

8. A method according to any of previous claims, whereby when an advertisement is to be sent in a given area for a given topic, the application server analyses the user location profiles to determine a user location profile having highest weight for a keyword relating to said given topic among a set of user location profiles having higher weights for a location category relating to said given area.

9. A server (AS) for user profiling for location based advertising, the server being included in a telecommunication network (TN) and linked to a set of base stations (BS) to which a set of communication devices (CD) is connected, the server comprising:
means (LPU) for receiving messages from base stations (BS), each message containing a keyword list including keywords related to Uniform Resource Locator traffic having passed through the base station during the time a communication device (CD) was connected to the base station and being associated with the identifier of the base station and the international identity IMSI of the communication device, and each received message updating a user location profile linked to the international identity IMSI of the communication device (CD),
means (LPU) for extracting, for each received message, a location category corresponding to the identifier of the base station and associating the location category with the keyword list in the user location profile,
means (LPU) for assigning a weight to each keyword of the keyword list associated with a location category in a user location profile, by increasing the weight of the keywords which occur frequently in the location category and rarely in other location categories in a user location profile,
means (LPU) for assigning a weight to each location category of the keyword list of the user location profile, by increasing the weight of the location categories which occur frequently in the user location profile and rarely in other user location profiles.

10. A computer program capable of being implemented within a server (AS) for user profiling for location based advertising, the server (AS) being included in a telecommunication network (TN) and linked to a set of base stations (BS) to which a set of communication devices (CD) is connected, said program comprising instructions which, when the program is loaded and executed within said server, implement a method as claimed in any of claims 1 to 8.
